# EUROPEAN PATENT APPLICATION

(11) **EP 4 683 144 A1**
(43) Date of publication of application: **21.01.2026**
(21) Application number: 24928114.8
(22) Date of filing: 23.10.2024
(51) Int. Cl.: H02G 9/02

(54) **SUBMARINE CABLE JOINT PROTECTION DEVICE**

(30) Priority: 06.03.2024 CN 202410256858
(71) Applicant: Zhongtian Technology Marine Systems Co., Ltd., Nantong, Jiangsu 226010 (CN); Jiangsu Zhongtian Technology Co., Ltd., Nantong, Jiangsu 226000 (CN)
(72) Inventor: ZHANG, Suhao, Nantong, Jiangsu 226010 (CN); LU, Qi, Nantong, Jiangsu 226010 (CN); XIE, Shuhong, Nantong, Jiangsu 226010 (CN); GUO, Chaoyang, Nantong, Jiangsu 226010 (CN); ZHANG, Zhifeng, Nantong, Jiangsu 226010 (CN); FENG, Yawen, Nantong, Jiangsu 226010 (CN); GE, Zhixiao, Nantong, Jiangsu 226010 (CN); DONG, Wulei, Nantong, Jiangsu 226010 (CN)
(74) Representative: J A Kemp LLP
(86) International application number: PCT/CN2024/126824
(87) International publication number: WO 2025/185184

(57) **Abstract**

The present invention provides a submarine cable joint protection apparatus, which relates to the field of submarine cables. The submarine cable joint protection apparatus provided by the present invention includes an outer shell and a reinforcement assembly; where the outer shell is configured to cover the outside of a submarine cable joint, and the reinforcement assembly is arranged inside the outer shell; the reinforcement assembly includes a plurality of pads, which are arranged adjacent to each other in sequence along the same direction, and at least one of the plurality of pads is connected to the inner wall of the outer shell; at least one mounting groove is formed between two adjacent pads; the shape of the mounting groove matches the shape of the joint; the submarine cable joint is configured to be clamped in the mounting groove. The present invention provides a submarine cable joint protection apparatus, which can avoid the transfer and deformation of the submarine cable joint during the transfer of the submarine cable joint protection apparatus.

## Description

The present application claims priority to Chinese Patent Application No. 202410256858.8, filed with the China National Intellectual Property Administration on March 6, 2024, and entitled "SUBMARINE CABLE JOINT PROTECTION APPARATUS", which is hereby incorporated by reference in its entirety.

### TECHNICAL FIELD

The present invention relates to the field of submarine cables, and in particular to a submarine cable joint protection apparatus.

### BACKGROUND

A submarine cable joint box is a type of protective apparatus arranged outside the submarine cable joint. The submarine cable joint box can increase the strength of the submarine cable joint and prevent external forces such as ocean currents and marine life from directly acting on relatively fragile submarine cable joint.

In the prior art, the submarine cable joint box is generally a hollow, closed shell structure whose length is greater than that of the submarine cable joint, so as to completely cover the submarine cable joint, thereby forming a protection for the submarine cable joint. The submarine cable joint box is generally installed outside the submarine cable joint after the setting of submarine cable joint is completed, and is placed on the seabed by hoisting.

However, during the installation and hoisting of the above submarine cable joint box, the internal submarine cable joint may undergo relative transfer and deformation due to the transfer of the submarine cable joint box, thereby causing damage to the submarine cable joint.

### SUMMARY

**In** order to solve at least one of the problems mentioned in the background art, the present invention provides a submarine cable joint protection apparatus, which can avoid the transfer and deformation of the submarine cable joint during the transfer of the submarine cable joint protection apparatus.

**In** order to achieve the above object, the present invention provides the following technical solutions.

The present invention provides a submarine cable joint protection apparatus, including an outer shell and a reinforcement assembly, where the outer shell is configured to cover an outside of a submarine cable joint, and the reinforcement assembly is arranged inside the outer shell;
the reinforcement assembly includes a plurality of pads, the plurality of pads are arranged adjacent to each other in sequence along a same direction, and at least one of the plurality of pads is connected to an inner wall of the outer shell;
at least one mounting groove is formed between two adjacent pads, a shape of the mounting groove matches a shape of the joint, and the submarine cable joint is configured to be clamped in the mounting groove.

As an optional embodiment, the plurality of pads include a first pad, a second pad and a third pad, and the third pad is located between the first pad and the second pad; the first pad and the second pad are each provided with a first arc-shaped clamping groove on a side facing the third pad; the third pad is provided with a second arc-shaped clamping groove on respective sides that face the first pad and the second pad; the first arc-shaped clamping groove and corresponding second arc-shaped clamping groove jointly form the mounting groove; and the submarine cable joint is configured to be clamped between the first arc-shaped clamping groove and the second arc-shaped clamping groove that are mutually corresponding.

As an optional embodiment, there is a gap between mounting grooves, and at least part of the third pad is filled in the gap so that submarine cable joints in the mounting grooves are isolated from each other through the third pad.

As an optional embodiment, the third pad is detachably connected between the first pad and the second pad.

As an optional embodiment, a first connecting plate and a second connecting plate are further included, where the first connecting plate and the second connecting plate are arranged on two opposite sides of the reinforcement assembly along an axial direction of the outer shell, one end of the first connecting plate is connected to the first pad, and the other end of the first connecting plate is connected to the third pad; one end of the second connecting plate is connected to the second pad, and the other end of the second connecting plate is connected to the third pad.

As an optional embodiment, the mounting grooves are three in number, one mounting groove being formed between the first pad and the third pad and two mounting grooves being formed between the second pad and the third pad.

As an optional embodiment, a side of the second pad adjacent to the outer shell is provided with a limiting groove and a side of the outer shell adjacent to the second pad is provided with a limiting protrusion, or, a side of the second pad adjacent to the outer shell is provided with a limiting protrusion and a side of the outer shell adjacent to the second pad is provided with a limiting groove; the limiting groove and corresponding limiting protrusion are mutually clamped.

As an optional embodiment, the outer shell is cylindrical, and the axial direction of the outer shell is consistent with the axial direction of the submarine cable joint.

As an optional embodiment, there are at least two reinforcement assemblies, and the at least two reinforcement assemblies are arranged at intervals along the axial direction of the outer shell.

As an optional embodiment, the outer shell includes a first arc-shaped shell and a second arc-shaped shell, the first arc-shaped shell and the second arc-shaped shell being spliced along a circumferential direction of the outer shell to form the outer shell.

The submarine cable joint protection apparatus provided by the present invention includes an outer shell and a reinforcement assembly; where the outer shell is configured to cover the outside of the submarine cable joint, and the reinforcement assembly is arranged inside the outer shell; the reinforcement assembly includes a plurality of pads, the plurality of pads are arranged adjacent to each other in sequence along the same direction, and at least one of the plurality of pads is connected to the inner wall of the outer shell; at least one mounting groove is formed between two adjacent pads; the shape of the mounting groove matches the shape of the joint; the submarine cable joint is configured to be clamped in the mounting groove. For the submarine cable joint protection apparatus provided by the present invention, the reinforcement assembly is provided inside the outer shell and includes a plurality of pads, and a mounting groove for clamping the submarine cable joint is formed between two adjacent pads. Thus, on one hand, the respective submarine cable joints can be separated from each other by the pads to avoid mutual interference between the submarine cable joints; on the other hand, the submarine cable joint is sandwiched between the pads, and at least one of the pads is connected to the inside of the shell, so that the position of the submarine cable joint inside the shell can be restricted, preventing the submarine cable joint from movement, rolling, deformation and other condition during the maintenance, installation and hoisting of the submarine cable joint protection apparatus, and improving the protective effect on the submarine cable joint.

### BRIEF DESCRIPTION OF DRAWINGS

In order to more clearly illustrate the embodiments of the present invention or the technical solutions in the prior art, the following briefly introduces the drawings required for use in the description of the embodiments or the prior art. Obviously, the drawings described below are some embodiments of the present invention. For persons skilled in the art, other drawings can also be obtained based on these drawings without making creative efforts.
FIG. 1 is a schematic diagram of a first structure of a submarine cable joint protection apparatus provided by an embodiment of the present invention.
FIG. 2 is a schematic side view of FIG. 1.
FIG. 3 is a schematic diagram of a second structure of a submarine cable joint protection apparatus provided by an embodiment of the present invention.

Description of reference numerals:
100 - submarine cable joint protection apparatus;
110 - outer shell;
111 - first arc-shaped shell;
112 - second arc-shaped shell;
120 - reinforcement assembly;
121 - first pad;
122 - second pad;
123 - third pad;
130 - mounting groove;
140 - first connecting plate;
150 - second connecting plate;
160 - limiting groove;
170 - limiting protrusion;
200 - submarine cable joint.

### DESCRIPTION OF EMBODIMENTS

The technical solutions in the embodiments of the present invention will be clearly and completely described below in conjunction with the drawings in the embodiments of the present invention. Obviously, the described embodiments are only part of the embodiments of the present invention, rather than all the embodiments. Based on the embodiments of the present invention, all other embodiments obtained by persons skilled in the art without making any creative effort shall fall within the scope of protection of the present invention.

In the application, the orientations or positional relationships indicated by terms such as "upper", "lower", "left", "right", "front", "back", "top", "bottom", "inside", "outside", "vertical", "horizontal", "transverse", and "longitudinal" are based on the orientations or positional relationships shown in the accompanying drawings. These terms are mainly intended to better describe the present invention and its embodiments, and are not intended to limit the indicated devices, elements or components to have a specific orientation, or to be constructed and operated in a specific orientation.

Moreover, some of the above terms may be used to express other meanings in addition to indicating orientations or positional relationships. For example, the term "upper" may also be used to indicate a certain dependency or connection relationship in certain circumstances. For persons skilled in the art, the specific meanings of these terms in the present invention can be understood according to specific circumstances.

In addition, the terms "installation", "setting", "provided with", "connection", and "connected" should be understood in a broad sense. For example, it may be a fixed connection, a detachable connection, or an integral structure; it may be a mechanical connection or an electrical connection; it may be a direct connection or an indirect connection via an intermediate medium; or it may be an internal communication between two devices, elements or components. For persons skilled in the art, the specific meanings of the above terms in the present invention can be understood according to specific circumstances.

In addition, the terms "first", "second", etc., are mainly intended to distinguish different apparatuses, elements or components (the specific types and structures may be the same or different), and are not intended to indicate or imply the relative importance and quantity of the indicated apparatuses, elements or components. Unless otherwise specified, "plurality" means two or more.

The existing submarine cable joint box is generally a hollow, closed shell structure whose length is greater than that of the submarine cable joint, so as to completely cover the submarine cable joint, thereby forming a protection for the submarine cable joint. The submarine cable joint box is generally installed outside the submarine cable joint after the setting of submarine cable joint is completed, and is placed on the seabed by hoisting. However, during the installation and hoisting of the submarine cable joint box, the internal submarine cable joint may undergo relative transfer and deformation due to the transfer of the submarine cable joint box, thereby causing damage to the submarine cable joint.

In view of this, the present invention provides a submarine cable joint protection apparatus, including an outer shell and a reinforcement assembly; where the outer shell is configured to cover the outside of the submarine cable joint, and the reinforcement assembly is arranged inside the outer shell; the reinforcement assembly includes a plurality of pads, the plurality of pads are arranged adjacent to each other in sequence along the same direction, and at least one of the plurality of pads is connected to the inner wall of the outer shell; at least one mounting groove is formed between two adjacent pads; the shape of the mounting groove matches the shape of the joint; the submarine cable joint is configured to be clamped in the mounting groove. Thus, on one hand, the respective submarine cable joints can be isolated from each other by the pads to avoid mutual interference between the submarine cable joints; on the other hand, the submarine cable joint is sandwiched between the pads, and at least one of the pads is connected to the inside of the shell, so that the position of the submarine cable joint inside the shell can be restricted, preventing the submarine cable joint from movement, rolling, deformation and other condition during the maintenance, installation and hoisting of the submarine cable joint protection apparatus, and improving the protective effect on the submarine cable joint.

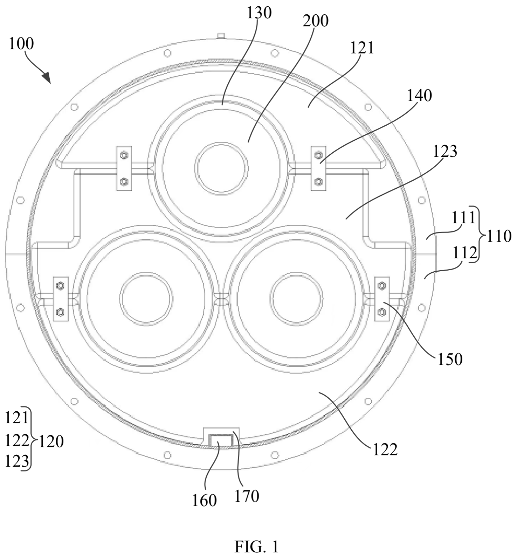

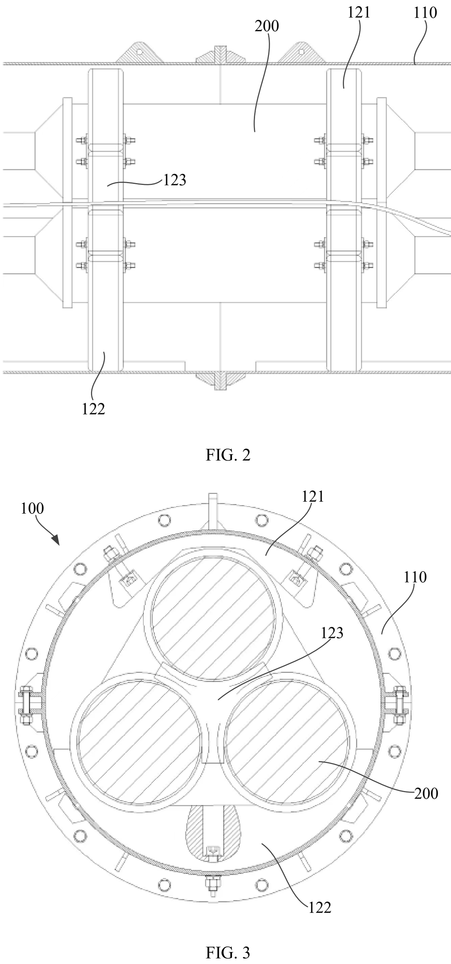

FIG. 1 is a schematic diagram of a first structure of a submarine cable joint protection apparatus provided by an embodiment of the present invention; FIG. 2 is a schematic side view of FIG. 1; FIG. 3 is a schematic diagram of a second structure of a submarine cable joint protection apparatus provided by an embodiment of the present invention. With reference to FIGS. 1 to 3, an embodiment of the present invention provides a submarine cable joint protection apparatus 100, including an outer shell 110 and a reinforcement assembly 120; where the outer shell 110 is configured to cover the outside of the submarine cable joint 200, and the reinforcement assembly 120 is arranged inside the outer shell 110; the reinforcement assembly 120 includes a plurality of pads, which are arranged adjacent to each other in sequence along the same direction, and at least one of the plurality of pads is connected to the inner wall of the outer shell 110; at least one mounting groove 130 is formed between two adjacent pads; the shape of the mounting groove matches the shape of the submarine cable joint 200; the submarine cable joint 200 is configured to be clamped in the mounting groove 130.

For the submarine cable joint protection apparatus 100 provided by the embodiment of the present invention, the reinforcement assembly 120 is arranged inside the outer shell 110 and includes a plurality of pads, and a mounting groove 130 for clamping the submarine cable joint 200 is formed between two adjacent pads. Thus, on one hand, the pads can isolate the respective submarine cable joints 200 from each other to avoid mutual interference between the submarine cable joints 200; on the other hand, the submarine cable joint 200 is sandwiched between the pads, and at least one of the pads is connected to the inside of the shell, so that the position of the submarine cable joint 200 inside the shell can be restricted, preventing the submarine cable joint 200 from movement, rolling, deformation and other condition during the maintenance, installation and hoisting of the submarine cable joint protection apparatus 100, and improving the protective effect on the submarine cable joint 200.

In the above embodiment, the plurality of pads include a first pad 121, a second pad 122 and a third pad 123, where the third pad 123 is located between the first pad 121 and the second pad 122; each of the first pad 121 and the second pad 122 can be provided with a first arc-shaped clamping groove on its side facing the third pad 123, and both sides of the third pad 123 respectively facing the first pad 121 and the second pad 122 are each provided with a second arc-shaped clamping groove. The first arc-shaped clamping groove and the corresponding second arc-shaped clamping groove jointly form the mounting groove 130, and the submarine cable joint 200 is configured to be clamped between the mutually corresponding first arc-shaped clamping groove and second arc-shaped clamping groove. It is understandable that the circumference of the mounting groove 130 formed by splicing the first arc-shaped clamping groove and the second arc-shaped clamping groove together may be slightly larger than the outer circumference of the submarine cable joint 200, so as to prevent the inner wall of the mounting groove 130 from squeezing the submarine cable joint 200.

In addition, a layer of elastic gasket with a relatively large friction coefficient can also be arranged between the inner walls of the first and second arc-shaped clamping grooves and the submarine cable joint 200. Specifically, the elastic gasket can be made of resin material or rubber material. Through the elastic gasket, on one hand, protection for the submarine cable joint 200 is formed to prevent the submarine cable joint 200 from being directly subjected to rigid contact; on the other hand, the friction force between the submarine cable joint 200 and the inner walls of the first and second arc-shaped clamping grooves can be further increased.

As shown in FIG. 1 and FIG. 2, the outer shell 110 can be cylindrical as a whole, the axial direction of the outer shell 110 is consistent with the axial direction of the submarine cable joint 200, and the interior of the outer shell 110 is hollow and its two ends along the axial direction are in a contracted funnel shape, so as to form a tight connection between the two ends and the submarine cable. Correspondingly, the side of the first pad 121 and the second pad 122 facing the inner wall of the outer shell 110 has a shape that can be designed as an arc surface, so that the first pad 121 and the second pad 122 can be more firmly connected with the inner wall of the outer shell 110.

In the above embodiments, there are at least two reinforcement assemblies 120, which are arranged at intervals along the axial direction of the outer shell 110. As shown in FIG. 2, there are two reinforcement assemblies 120, which are arranged at the two ends of the outer shell 110 along the axial direction of the outer shell 110, so that the submarine cable joint 200 therein can bear force more evenly.

In the above embodiments, the outer shell 110 may include a first arc-shaped shell 111 and a second arc-shaped shell 112. The first arc-shaped shell 111 and the second arc-shaped shell 112 are spliced along the circumferential direction of the outer shell 110 to form the outer shell 110. The outer shell 110 is composed of two parts, which facilitates the disassembly and installation of the outer shell 110. Specifically, the first arc-shaped shell 111 and the second arc-shaped shell 112 may be detachably connected by bolts to facilitate subsequent disassembly and assembly.

As shown in FIG. 1 and FIG. 3, in the above embodiments, there may be a gap between the mounting grooves 130, and at least part of the third pad 123 is filled in the gap. The submarine cable joints 200 in the mounting grooves 130 can be isolated from each other through the third pad 123, thereby preventing mutual collision and interference between the submarine cable joints 200.

In the above embodiments, the third pad 123 may be detachably connected between the first pad 121 and the second pad 122. In this way, when one of the pads is connected to the inner wall of the outer shell 110, the movement of the remaining pads inside the outer shell 110 is also restricted, so as to avoid the transfer movement of all pads relative to the outer shell 110. The detachable connection between the third pad 123 and the first pad 121 as well as the second pad 122 facilitates disassembly and installation.

As shown in FIG. 1 and FIG. 2, in the above embodiments, the submarine cable joint protection apparatus 100 may further include a first connecting plate 140 and a second connecting plate 150. The first connecting plate 140 and the second connecting plate 150 may be arranged on opposite sides of the reinforcement assembly 120 along the axial direction of the outer shell 110. Specifically, one end of the first connecting plate 140 may be connected to the first pad 121, and the other end of the first connecting plate 140 may be connected to the third pad 123; one end of the second connecting plate 150 is connected to the second pad 122, and the other end of the second connecting plate 150 is connected to the third pad 123. The first connecting plate 140 and the second connecting plate 150 can realize the detachable connection among the first pad 121, the second pad 122 and the third pad 123; and the connection from both sides of the pads can transfer the axial shear force between the pads to other pads. Specifically, the aforementioned pads and connecting plates may be provided with through holes, and double-ended threaded screws may be used to penetrate the through holes on the corresponding pads and connecting plates, and nuts may be tightened onto the two-sided threads of screws to connect the connecting plate and the pad together. It can be understood that when a certain pad bears a force from the axial direction of the outer shell 110, this force can be transferred to other pads through the first connecting plate 140 or the second connecting plate 150, thereby preventing the screws from being directly subjected to shear force and deformed, which would cause difficulty in subsequent disassembly.

As shown in FIG. 1 and FIG. 3, in the above embodiments, there may be three mounting grooves 130. One mounting groove 130 may be formed between the first pad 121 and the third pad 123, and two mounting grooves 130 are formed between the second pad 122 and the third pad 123. Among them, the three mounting grooves 130 may be specifically arranged in delta-shaped distribution; correspondingly, the submarine cable may be a three-core submarine cable, which has three joints, and each submarine cable joint 200 is correspondingly clamped in the respective mounting groove 130.

In the above embodiments, a limiting groove 160 may be provided on the side of the second pad 122 adjacent to the outer shell 110, and a limiting protrusion 170 may be provided on the side of the outer shell 110 adjacent to the second pad 122; or, a limiting protrusion 170 may be provided on the side of the second pad 122 adjacent to the outer shell 110, and a limiting groove 160 may be provided on the side of the outer shell 110 adjacent to the second pad 122. The second pad 122 and the outer shell 110 may be mutually clamped through the limiting groove 160 and the corresponding limiting protrusion 170; at the same time, the first pad 121, the second pad 122 and the third pad 123 may be connected together. In this way, all pads can be prevented from rotating relative to the outer shell 110. Of course, a structure, that is similar to the limiting groove 160 and limiting protrusion 170 between the second pad 122 and the outer shell 110, may also be provided between the first pad 121 and the outer shell 110 or between the third pad 123 and the outer shell 110, which is not limited herein.

As shown in FIG. 3, in the above embodiments, both the first pad 121 and the second pad 122 can be connected to the inner wall of the outer shell 110 via bolts. The third pad 123 is placed between the three submarine cable joints 200, with no connection relationship with the first pad 121 and the second pad 122. This arrangement can further simplify the difficulty of disassembly and assembly of the submarine cable joint protection apparatus 100. Specifically, the first pad 121 can be connected to the first arc-shaped shell 111 via bolts in advance, and the second pad 122 can be connected to the second arc-shaped shell 112 via bolts. When disassembling or assembling the submarine cable joint protection apparatus 100, it is only necessary to take out the third pad 123 or place the third pad 123 in the corresponding position, making the operation extremely convenient.

The submarine cable joint protection apparatus 100 provided by the embodiment of the present invention includes an outer shell 110 and a reinforcement assembly 120; where the outer shell 110 is configured to cover the outside of the submarine cable joint 200, and the reinforcement assembly 120 is arranged inside the outer shell 110; the reinforcement assembly 120 includes a plurality of pads, which are arranged adjacent to each other in sequence along the same direction, and at least one of the plurality of pads is connected to the inner wall of the outer shell 110; at least one mounting groove 130 is formed between two adjacent pads; the shape of the mounting groove 130 matches the shape of the submarine cable joint 200; the submarine cable joint 200 is configured to be clamped in the mounting groove 130. For the submarine cable joint protection apparatus 100 provided by the embodiment of the present invention, the reinforcement assembly 120 is arranged inside the outer shell 110 and includes a plurality of pads, and a mounting groove 130 for clamping the submarine cable joint 200 is formed between two adjacent pads. Thus, on one hand, the pads can isolate the respective submarine cable joints 200 from each other to avoid mutual interference between the submarine cable joints 200; on the other hand, the submarine cable joint 200 is sandwiched between the pads, and at least one of the pads is connected to the inside of the shell, so that the position of the submarine cable joint 200 inside the shell can be restricted, preventing the submarine cable joint 200 from movement, rolling, deformation and other condition during the maintenance, installation and hoisting of the submarine cable joint protection apparatus 100, and improving the protective effect on the submarine cable joint 200.

Finally, it should be noted that the above embodiments are only used to illustrate the technical solutions of the present invention, rather than to limit them. Although the present invention has been described in detail with reference to the aforementioned embodiments, persons skilled in the art should understand that they can still modify the technical solutions recorded in the aforementioned embodiments, or make equivalent replacements for some or all of the technical features; and these modifications or replacements do not make the essence of the corresponding technical solutions deviate from the scope of the technical solutions of the embodiments of the present invention.

## Claims

1. A submarine cable joint protection apparatus, comprising an outer shell and a reinforcement assembly, wherein the outer shell is configured to cover an outside of a submarine cable joint, and the reinforcement assembly is arranged inside the outer shell;
the reinforcement assembly comprises a plurality of pads, the plurality of pads are arranged adjacent to each other in sequence along a same direction, and at least one of the plurality of pads is connected to an inner wall of the outer shell;
at least one mounting groove is formed between two adjacent pads, a shape of the mounting groove matches a shape of the joint, and the submarine cable joint is configured to be clamped in the mounting groove.

2. The submarine cable joint protection apparatus according to claim 1, wherein the plurality of pads comprise a first pad, a second pad and a third pad, and the third pad is located between the first pad and the second pad; the first pad and the second pad are each provided with a first arc-shaped clamping groove on a side facing the third pad; the third pad is provided with a second arc-shaped clamping groove on respective sides that face the first pad and the second pad; the first arc-shaped clamping groove and corresponding second arc-shaped clamping groove jointly form the mounting groove; and the submarine cable joint is configured to be clamped between the first arc-shaped clamping groove and the second arc-shaped clamping groove that are mutually corresponding.

3. The submarine cable joint protection apparatus according to claim 2, wherein there is a gap between mounting grooves, and at least part of the third pad is filled in the gap so that submarine cable joints in the mounting grooves are isolated from each other through the third pad.

4. The submarine cable joint protection apparatus according to claim 3, wherein the third pad is detachably connected between the first pad and the second pad.

5. The submarine cable joint protection apparatus according to claim 4, further comprising a first connecting plate and a second connecting plate, wherein the first connecting plate and the second connecting plate are arranged on two opposite sides of the reinforcement assembly along an axial direction of the outer shell, one end of the first connecting plate is connected to the first pad, and the other end of the first connecting plate is connected to the third pad; one end of the second connecting plate is connected to the second pad, and the other end of the second connecting plate is connected to the third pad.

6. The submarine cable joint protection apparatus according to claim 5, wherein the mounting grooves are three in number, one mounting groove being formed between the first pad and the third pad and two mounting grooves being formed between the second pad and the third pad.

7. The submarine cable joint protection apparatus according to claim 6, wherein a side of the second pad adjacent to the outer shell is provided with a limiting groove and a side of the outer shell adjacent to the second pad is provided with a limiting protrusion, or, a side of the second pad adjacent to the outer shell is provided with a limiting protrusion and a side of the outer shell adjacent to the second pad is provided with a limiting groove; the limiting groove and corresponding limiting protrusion are mutually clamped.

8. The submarine cable joint protection apparatus according to any one of claims 1-7, wherein the outer shell is cylindrical, and an axial direction of the outer shell is consistent with an axial direction of the submarine cable joint.

9. The submarine cable joint protection apparatus according to any one of claims 1-7, wherein there are at least two reinforcement assemblies, and the at least two reinforcement assemblies are arranged at intervals along an axial direction of the outer shell.

10. The submarine cable joint protection apparatus according to any one of claims 1-7, wherein the outer shell comprises a first arc-shaped shell and a second arc-shaped shell, the first arc-shaped shell and the second arc-shaped shell being spliced along a circumferential direction of the outer shell to form the outer shell.
